Europäisches Patentamt

European Patent Office

Office européen des brevets

(11) Publication number: **0 404 312**
**A1**

## (12) EUROPEAN PATENT APPLICATION

(21) Application number: **90304557.3**

(22) Date of filing: **26.04.90**

(51) Int. Cl.⁵: **G01K 1/14, G01K 13/00**

(30) Priority: **19.06.89 US 368496**

(43) Date of publication of application:
**27.12.90 Bulletin 90/52**

(84) Designated Contracting States:
**BE DE ES FR IT**

(71) Applicant: **WESTINGHOUSE ELECTRIC CORPORATION**
**Westinghouse Building Gateway Center**
**Pittsburgh Pennsylvania 15222(US)**

(72) Inventor: **Fayfich, Ronald Richard**
**3912 Laurel Oak Drive**
**Murrysville, PA 15668(US)**

(74) Representative: **van Berlyn, Ronald Gilbert**
**23, Centre Heights**
**London, NW3 6JG(GB)**

(54) **Thermocouple installation.**

(57) An arrangement for measuring the temperature of a metal body, the body having a surface (6), the arrangement including: a thermocouple (2,4) composed of a sheath (4) and two wires (2) being joined together, to form a thermocouple junction; a first metal band (8) welded to the surface (6) and holding the sheathed junction in contact with the surface (6); and a second metal band (10) welded to the surface (6) and holding the sheath (4) against the surface (6). The thermocouple (2,4) may be secured to the surface (6) of the metal body by the steps of: placing the thermocouple (2,4) in a desired position on the surface (6); placing a first metal band (8) in contact with the surface (6), with the sheathed junction, interposed between the first band (8) and the surface (6); placing a second metal band (10) in contact with the surface (6), with the sheath (4) interposed between the second band (10) and the surface (6) at a location spaced from the first band (8); and welding each band (8,10) fo the surface (6) so that the projecting wires (2) and the sheath (4) are held against the surface (6).

## THERMOCOUPLE INSTALLATION

This invention was made under United States government contract, and the Federal Government may have rights in the subject invention.

The present invention relates to the installation of thermocouples directly on surfaces whose temperatures are to be measured.

When a thermocouple is to be employed to measure the temperature at a metal surface, it is desirable to secure the thermocouple junction directly to the metal surface. Various techniques which have heretofore been proposed include binding, clamping, and adhesive attachment. These techniques have frequently been found to be impractical because of the configuration of the surface in question or the temperature levels encountered.

In addition, certain known techniques involve orienting the thermocouples such that they conduct heat away from the surface and the thermocouple junction, or permit the thermocouple to experience slippage, or allow air gaps to form between the thermocouple junction and the surface.

It is a primary object of the present invention to fasten a thermocouple to a metal surface in a manner which avoids the above-noted drawbacks.

Another object of the invention is to fasten a thermocouple to a metal surface in a manner which has a minimal affect on the material characteristics at the metal surface.

The above and other objects are achieved, according to the present invention, by the combination, with a metal body whose temperature is to be measured, the body having a surface, of: a thermocouple composed of a sheath and two wires, the wires having a length segment which projects out of the sheath and being joined together, to form a thermocouple junction; a first metal band welded to the surface and holding the junction in contact with the surface; and a second metal band welded to the surface and holding the sheath against the surface.

A thermocouple mounting arrangement according to the present invention can be used for securing a thermocouple to a variety of metals including, in particular, stainless steel, carbon steel and corrosion-resistent nickel-chromium alloys such as those sold under the U.S. Trademark "Inconel", frequently used as a cladding layer.

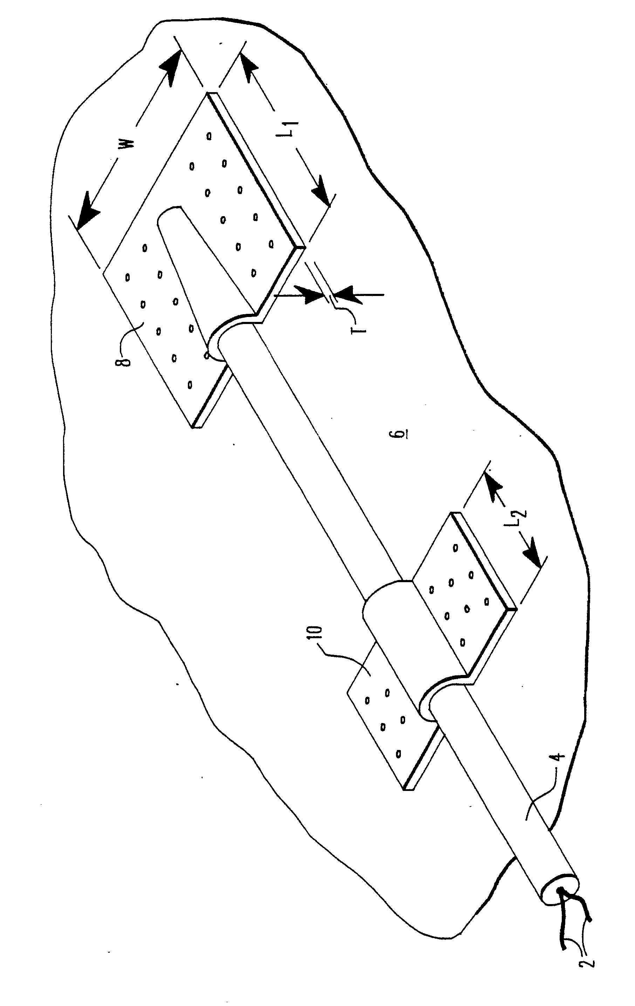

The sole Figure is a perspective view of a recessed thermocouple mounted to a metal surface by a fastening arrangement according to one preferred embodiment of the invention.

## DESCRIPTION OF THE PREFERRED EMBODIMENTS

According to one preferred embodiment of the invention, a thermocouple composed of a pair of wires 2 and a protective sheath 4 is secured to a metal surface 6 by means of two metal bands 8 and 10 which are spaced apart along the length of the thermocouple and are each tack welded to surface 4. Band 8 is secured to an end portion of the thermocouple, while band 10 encloses a portion of sheath 4. Additional bands 10 can be secured around sheath 4 as needed.

Band 8 is preformed, for example around a wire die, to have a recessed portion which fits closely around the thermocouple sheathed junction, and thus holds the thermocouple junction securely against surface 6 Similarly, band 10 is preformed to have a recessed portion which mates with the outline of sheath 4.

Installation is effected by placing preformed band 8 around the sheathed thermocouple junction and then tack welding band 8 to surface 6 at a plurality of points, preferably including rows of points directly adjacent the portion of band 8 which encloses the sheathed thermocouple junction. Band 10 is secured to surface 6 in a similar manner, also preferably by providing tack welding points adjacent the portion of band 10 which encloses sheath 4.

Preferably, bands 8 and 10 are made relatively thin (dimension T) since this facilitates the tack welding procedure while providing an attachment of sufficient strength. Moreover, thin bands can be easily removed when the thermocouple is no longer required.

In an exemplary embodiment of the invention which was employed to hold a thermocouple having a sheath diameter of 1 mm, each band 8 and 10 had a width, W, of 1.25 cm and a thickness, T, of 0.125 mm. Band 8 had a length, $L_1$, of 1.25 cm and band 10 had a length, $L_2$, of 6.35 mm. Bands 8 and 10 were spaced apart by a distance of the order of 10-16 cm.

One significant advantage offered by the invention is that the tack welding procedure has a minimal effect on the material characteristics at surface 6. Specifically, the heat generated by the tack welding procedure has been found to affect the surface to only a very small depth so that when bands 8 and 10 are removed, the original characteristics of surface 6 can be fully restored by grinding away only a thin surface layer. The depth to which surface 6 is affected by the mounting and subsequent removal of a band 8 or 10 for two exemplary tack welding power settings and two combinations of metals is set forth on the following table:

| Maximum Depth of Penetration Into Surface (6), mm | | | |
|---|---|---|---|
| Materials | | Power setting, Watt-sec. | |
| Band (8, 10) | Surface (6) | 50 | 75 |
| Type 304 S.S. | SA-508 carbon steel | .221 | .241 |
| Inconel(TM) 600 | Inconel(TM) 600 cladding | .210 | .234 |

Thus, after removing bands 8 and 10, only a layer of the order of 0.25 mm need be removed from surface 6, for example by grinding, in order to completely remove the heat affected zone.

While the description above refers to particular embodiments of the present invention, it will be understood that many modifications may be made without departing from the spirit thereof. The accompanying claims are intended to cover such modifications as would fall within the true scope and spirit of the present invention.

The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

**Claims**

1. In combination with a metal body whose temperature is to be measured, the body having a surface (6), the combination characterized by a thermocouple (2,4) composed of a sheath (4) and two wires (2) extending through said sheath (4), said wires (2) having a length segment which projects out of said sheath (4) and being joined together, outside of said sheath (4), to form a thermocouple junction; a first metal band (8) welded to said surface (6) and holding said junction in contact with said surface (6); and a second metal band (10) welded to said surface (6) and holding said sheath (4) against said surface (6).

2. The combination defined in claim 1 wherein each said band (8,10) is tack welded to said surface (6).

3. The combination defined in claim 2 further characterized in that said first band (8) has a region shaped to conform to the outline of at least part of said length segment, and said second band (10) has a region shaped to conform to the outline of said sheath (4).

4. The combination defined in claim 3 wherein each said band (8,10) has a thickness of the order of 1.25 mm.

5. The combination defined in claim 3 wherein said metal body is composed of carbon steel and each said band (8,10) is composed of stainless steel.

6. The combination defined in claim 3 wherein said metal body and each said band (8,10) is composed of a nickel-chromium alloy.

7. A method of securing a thermocouple (2,4) to a surface (6) of a metal body, the thermocouple (2,4) including a sheath (4) and two wires (2) extending through, and projecting from, the sheath (4) and connected together, outside of the sheath (4), to form a thermocouple junction, said method characterized by the steps of:
placing the thermocouple (2,4) in a desired position on the surface (6);
placing a first metal band (8) in contact with the surface (6), with at least a portion of the wires (2) which project from the sheath (4), including the junction, interposed between the first band (8) and the surface (6);
placing a second metal band (10) in contact with the surface (6), with the sheath (4) interposed between the second band (10) and the surface (6) at a location spaced from the first band (8); and
welding each band (8,10) to the surface (6) so that the projecting wires (2) and the sheath (4) are held

3

against the surface (6).

8. A method as defined in claim 7 wherein said step of welding comprises tack welding.

9. A method as defined in claim 8 further characterized by the preliminary step of forming the first band (8) to have a recessed region conforming to the outline of the portion of the wires (2) which project from the sheath (4), and forming the second band (10) to have a recessed region conforming to the outline of the sheath (4).

10. A method as defined in claim 9 wherein each band (8,10) has a thickness of the order of 1.25 mm.

11. A method as defined in claim 9 wherein the metal body is composed of carbon steel and each band (8,10) is composed of stainless steel.

12. A method as defined in claim 9 wherein the metal body and each band (8,10) is composed of a nickel-chromium alloy.

EP 0 404 312 A1

European Patent
Office

**EUROPEAN SEARCH REPORT**

Application number

| | DOCUMENTS CONSIDERED TO BE RELEVANT | | | EP 90304557.3 |
|---|---|---|---|---|

| Category | Citation of document with indication, where appropriate, of relevant passages | Relevant to claim | CLASSIFICATION OF THE APPLICATION (Int Cl⁵) |
|---|---|---|---|
| A | <u>CH - A5 - 559 905</u><br>(HONEY WELL)<br>  * Fig. 2; claim 1 *<br>  -- | 1,3,7,<br>9 | G 01 K 1/14<br>G 01 K 13/00 |
| A | <u>FR - A - 1 094 857</u><br>(SOCIETE D'ETUDE)<br>  * Totality *<br>  ---- | 1,7 | |

| | TECHNICAL FIELDS SEARCHED (Int Cl⁵) |
|---|---|
| | G 01 K 1/00<br>G 01 K 7/00<br>G 01 K 13/00 |

The present search report has been drawn up for all claims

| Place of search | Date of completion of the search | Examiner |
|---|---|---|
| VIENNA | 05-09-1990 | FIALLA |